# EUROPÄISCHE PATENTANMELDUNG

(11) **EP 2 604 651 A1**
(43) Veröffentlichungstag der Anmeldung: **19.06.2013**
(21) Anmeldenummer: 11194047.4
(22) Anmeldetag: 16.12.2011
(51) Int. Cl.: C08L 9/06, C08L 21/00, C08L 1/00, C08L 1/12, C08K 5/103

(54) **Kautschukzubereitungen**

(71) Anmelder: Lanxess Deutschland GmbH, 51369 Leverkusen (DE)
(72) Erfinder: Unterberg, Heinz, 41540 Dormagen (DE); Weidenhaupt, Hermann-Josef, 50259 Pulheim (DE); Wiedemeier, Melanie, 41540 Dormagen (DE); Feldhues, Ulrich, 51465 Bergisch Gladbach (DE)

(57) **Zusammenfassung**

Die Erfindung betrifft neue Kautschukzubereitungen enthaltend Cellulose und/oder Cellulosederivate und Triacetin, deren Verwendung zur Herstellung von Kautschukvulkanisaten und die daraus hergestellten Kautschukvulkanisate.

## Beschreibung

Die vorliegende Erfindung betrifft neue Kautschukzubereitungen enthaltend Cellulose und/oder Cellulosederivate und Triacetin, deren Verwendung zur Herstellung von Kautschukvulkanisaten und die daraus hergestellten Kautschukvulkanisate sowie ein neues Additiv für Kautschuk.

20 bis 25 Prozent des Treibstoffverbrauchs eines Pkw resultieren aus dem Rollwiderstand der Reifen, bei Lastkraftwagen sind es sogar rund 30 Prozent. Diese Werte haben die EU-Kommission veranlasst, die Automobilindustrie per Verordnung zum Einsatz rollwiderstandsarmer Reifen zu verpflichten. Für Neuwagen tritt die Pflicht im Jahr 2011 in Kraft. Den weitaus größeren Teil des Marktes machen allerdings Reifen aus, die als Ersatz für alte und abgefahrene Pneus verwendet werden. Diese müssen ab 2012 hinsichtlich ihrer Kraftstoffeffizienz, Nasshaftung und Rollgeräusche gekennzeichnet werden. Ähnlich dem bereits von Haushaltsgeräten bekannten System sollen Klassen von A (beste Leistung) bis G (schlechteste Leistung) mehr Transparenz für den Verbraucher herbeiführen und als Entscheidungshilfe beim Kauf neuer Reifen dienen.

Spätestens seit sich die Europäische Union mit den Grenzwerten für den Kohlendioxidausstoß durch Pkws befasst, suchen die Automobilhersteller nach wirtschaftlichen Möglichkeiten, um die Zielmarke von höchstens 130 g/km CO₂-Emission zu erreichen. Wesentliche Bedeutung kommt dabei rollwiderstandsarmen Reifen zu. Sie leisten beim Abrollen weniger Verformungsarbeit und senken deshalb den Kraftstoffverbrauch. Je fester die Reifenlaufiläche auf der Fahrbahn haftet desto größer wird der Energieverlust durch Reibung und Verformung. Daraus folgt, dass die Kautschukmischung für die Reifenlauffläche nicht zu weich sein darf.

Damit die Verminderung des Rollwiderstands aber nicht auf Kosten anderer wichtiger Eigenschaften geschieht, werden zugleich auch die Anforderungen an die Nasshaftung und das Rollgeräusch festgelegt. Einen ersten Hinweis zur Beurteilung von Nassrutschverhalten und Rollwiderstand gibt der Verlustfaktor tan δ. Bei 0 °C sollte dieser möglichst hoch sein (gute Nassrutschfestigkeit), bei 60 bis 70°C möglichst niedrig (Reduktion des Rollwiderstands).

Es besteht also ein großer Bedarf an verbesserten Kautschukzubereitungen, die beim Einsatz in der Reifenherstellung zu Produkten führen, die über verbesserte Eigenschaften, wie geringeren Rollwiderstand und Rollgeräusch und bessere Nasshaftung, verfügen.

Es ist bekannt, zur Verbesserung der genannten Eigenschaften den Kautschukzubereitungen verstärkende Füllstoffe zuzusetzen. Verstärkende Füllstoffe können Ruß, Kieselsäure, Cellulose sowie Schichtsilikate sein.

Unter dem Begriff Verstärkung elastomerer Werkstoffe versteht man im Allgemeinen die Verlängerung der Lebensdauer, die Verbesserung der mechanischen Eigenschaften wie Festigkeit, Abrieb- oder Rollwiderstand aber auch die Verbesserung der dynamischen Eigenschaften auf Grund der Wechselwirkung zwischen Polymermatrix und Füllstoff.

Diese verstärkenden Füllstoffe können zwar oftmals die Produkteigenschaften verbessern, andererseits haben sie häufig einen negativen Einfluss auf die Verarbeitbarkeit der Kautschukmischung. Aus diesem Grund ist es üblich, der Kautschukmischung neben den verstärkenden Füllstoffen auch Hilfsmittel zuzusetzen, die die Verarbeitbarkeit der Kautschukmischung verbessern sollen. Beispielsweise kommen hierfür Fettsäureester, Fettsäuresalze oder Weichmacheröle zum Einsatz, die die Fließfähigkeit der Kautschukmischung verbessern sollen. Die genannten Zusatzstoffe haben zwar den Vorteil, dass sie die Fließfähigkeit der Kautschukmischung erniedrigen (niedrige Mooney Viskosität), gleichzeitig aber die Spannungswerte bei größerer Dehnung (z.B. 100% bis 300%) erhöhen bzw. nachteilig ist, dass sie die Härte der Vulkanisate vermindern, so dass die verstärkende Wirkung des Füllstoffes Einbuße erleidet. Eine zu geringe Härte oder Steifigkeit des Vulkanisates kann sich aber wiederum nachteilig auf die Produkteigenschaften auswirken. So resultiert eine zu geringe Härte des Vulkanisates in einem unbefriedigenden Fahrverhalten eines daraus hergestellten Autoreifens, besonders in Kurven. Eine Erhöhung der Dosierung des verstärkenden Füllstoffes führt zwar zu einer Erhöhung der Härte des Vulkanisates, gleichzeitig aber auch zu einer höheren Mischungsviskosität was sich wiederum nachteilig für die Verarbeitbarkeit des Vulkanisats erweist. Gleiches gilt für eine Reduktion des Weichmacheröles.

Bei der Herstellung von Vulkanisaten für PKW-Reifenlatifflächen hat sich der Einsatz von Kieselsäure als Füllstoff bewährt. Hier trägt die Kieselsäure mit zu einer guten Eigenschaftskombination von Rollwiderstand, Nassrutschfestigkeit und Abrieb bei.

Um die gewünschte Eigenschaftskombination zu erzielen, ist es wichtig, die Kieselsäure gut in der Kautschukzubereitung zu dispergieren und bei der Vulkanisation optimal an die Kautschukmatrix anzukoppeln. Aus dem Stand der Technik ist bekannt, hierfür der Kautschukmischung schwefelhaltige organische Silane (vgl. z. B. DE-A 24 47 614)) oder auch bestimmte polysulfidische Silane (vgl. z.B. EP-A1 0 0670 347 und US-A-4 709 065) als Verstärkungsadditive zuzusetzen. Bei den polysulfidischen Silanen sind jedoch relativ große Mengen dieser teuren Additive nötig, um eine akzeptable Verarbeitbarkeit zu erzielen.

Aus EP-A 1728821 ist bereits bekannt, kurze Fasern, z.B. Cellulosefasern von 0,1-12 mm Länge als Füllstoff in einem NBR-Kautschuk einzusetzen. Um eine bessere Dispergierbarkeit der Fasern zu ermöglichen, wurden verschiedene Weichmacher mit einem Molekulargewicht > 400 g/mol verwendet.

In der EP-A 2072574 wird eine mit Schwefel vernetzte Kautschukzusammensetzung beschrieben, die eine chemisch modifizierte, z.B. acetylierte, microfibrile Cellulose enthält. Diese vulkanisierte Kautschukzusammensetzung kann zur Herstellung von Reifen verwendet werden. Aus der EP-A 2072574 geht hervor, dass eine Zugabe von 1-50 Gewichtsteilen acetylierte Cellulose bezogen auf den Kautschuk einen 6% höhreren tan δ-Wert ergab. Der Fachmann versteht darunter eine Verschlechterung des Rollwiderstands. Somit entnimmt der Fachmann diesem Dokument, dass Cellulose und deren Derivate als Füllstoff in Kautschukmischungen bei den daraus hergestellten Reifen zu einer Verschlechterung des Rollwiderstands führen.

Generell ist bekannt, dass Kautschukzubereitungen Weichmacher enthalten können. Sie treten mit dem Kautschuk in Wechselwirkung und führen zu einer höheren Beweglichkeit der Kettensegmente und eventuell zum Auflösen kristalliner Bereiche. Sie bewirken, dass der Spannwert, die Härte abnehmen und die Elastizität sowie Kältebeständigkeit zunehmen. Es gibt Mineralölweichmacher wie paraffinische, napthenische und aromatische sowie synthetische Weichmacher, die sich einteilen lassen in aliphatische und aromatische Ester, Polyester, Phosphate, Ether und Thioether. Vertreter der Esterweichmacher sind u.a. Phthalsäureester, aliphatische Ester, Phosphorsäureester, Adipinsäureester, Trimilitatsäureester, Zitronensäureester, Glycol-Ester.

Die Verwendung von Triacetin als Weichmacher für Celluloseacetat ist in GB 317443 beschrieben.

Aufgabe der vorliegenden Erfindung war es, verbesserte füllstoffhaltige Kautschukzubereitungen bereit zu stellen, die über gute verarbeitungstechnische Eigenschaften verfügen und die weiterhin zu Vulkanisaten und daraus hergestellten Reifenlaufflächen führen, die einen verminderten Rollwiderstand aufweisen.

Es wurden neue Kautschukzubereitungen gefunden, die als Füllstoff Cellulose und/oder Cellulosederivate und als Weichmacher Triacetin enthalten.

Überraschenderweise verfügen die neuen Kautschukzubereitungen über längere Anvulkanisationszeiten in Kombination mit kürzeren Vulkanisationszeiten und zeichnen sich somit durch eine verbesserte Verarbeitbarkeit aus, ohne dass die Eigenschaften daraus hergestellter Kautschukvulkanisate wie Härte, Bruchdehnung, Zugfestigkeit, Abrieb negativ beeinflusst werden. Überraschenderweise verfügen auch die aus den neuen Kautschukzubereitungen hergestellten Vulkanisate über eine verbesserte Oberflächenbeschaffenheit, was sich beispielsweise durch einen verbesserten Rollwiderstand der daraus hergestellten Autoreifenlaufflächen bemerkbar macht.

Neben einer Erweiterung des technischen Anwendungsspektrums spielen zunehmend auch ökonomische und ökologische Aspekte eine bedeutende Rolle. Nicht nur die steigenden Rohstoffpreise, sondern auch die gestiegene Sensibilität der modernen Gesellschaft für ökologischen Aspekte in der Produktion, dem Gebrauch und der Entsorgung von Werkstoffen, motiviert die Industrie, ressourcensparende Produktionsmethoden voran zu treiben und umwelt- bzw. verbraucherfreundliche Produkte auf den Markt zu bringen.

Vor diesem Hintergrund ist ein weiterer Vorteil der erfindungsgemäßen Kautschukzubereitungen darin zu sehen, dass deren Inhaltsstoffe Cellulose und Triacetin aus nachwachsenden Rohstoffen gewonnen werden können. Triacetin wird aus pflanzlich gewonnenem Glycerin hergestellt; Cellulose aus pflanzlichen Fasern gewonnen.

Gegenstand der vorliegenden Erfindung sind Kautschukzubereitungen enthaltend mindestens einen Kautschuk, Triacetin und mindestens einen Füllstoff aus der Reihe Cellulose und/oder Cellulosederivat.

In der Fachliteratur wird bei Kautschukzubereitungen das Verhältnis der übrigen Bestandteile zu der Kautschukkomponente üblicherweise in der relativen Mengenangabe phr "Parts per hundred Parts Rubber" angegeben. Diese Mengenangabe soll im Folgenden hier auch verwendet werden.

Die erfindungsgemäße Kautschukzubereitung enthält im Allgemeinen 0,1 bis 100 phr an mindestens einer Cellulose und/oder Cellulosederivat, vorzugsweise 0,2 bis 50 phr, besonders bevorzugt 0,3 bis 30 phr.

Die erfindungsgemäße Kautschukzubereitung enthält im Allgemeinen 0,1 bis 80 phr an Triacetin, vorzugsweise 0,2 bis 60 phr und besonders bevorzugt 0,5 bis 45 phr, insbesondere 5-30 phr.

### Kautschuk

Die erfindungsgemäße Kautschukzubereitung enthält mindestens einen Kautschuk. Bevorzugt sind solche Kautschuke auf Basis von Dienen, wie insbesondere doppelbindungshaltige Kautschuke, die praktisch keinen Gelanteil enthalten und die nach DIN/ISO 1629 als R-Kautschuke bezeichnet werden. Diese Kautschuke haben Doppelbindungen in der Hauptkette. Bevorzugt verwendete Kautschukkomponenten sind beispielsweise solche auf Basis von
- NR:: Naturkautschuk
- SBR:: Styrol/Butadienkautschuk
- BR:: Polybutadienkautschuk
- IR:: Polyisopren
- SIBR:: Styrol/Isopren-Kautschuk
- NBR:: Nitrilkautschuk
- IIR:: Butylkautschuk (Isobuten/Isopren-Kautschuk)
- HNBR:: Hydrierter Nitrilkautschuk
- SNBR:: Styrol/Butadien/Acrylnitril-Kautschuk
- CR:: Polychloropren
- XSBR:: carboxylierter Styrol/Butadien-Kautschuk
- XNBR:: carboxylierter Butadien/Acrylnitril-Kautschuk
- ENR:: epoxydierter Naturkautschuk
- ESBR:: epoxydierter StyrolButadien-Kautschuk
und Mischungen davon.

Doppelbindungshaltige Kautschuke schließen erfindungsgemäß auch solche ein, die nach DIN/ISO 1629 M-Kautschuke sind und neben der gesättigten Hauptkette Doppelbindungen in Seitenketten aufweisen. Hierzu gehört z. B. EPDM.

Bevorzugte Kautschuke sind erfindungsgemäß: NR, BR, SBR, IIR und EPDM.

Besonders bevorzugt sind NR, BR sowie Styrol/Diolefine sowie Mischungen dieser Kautschuke.

Unter Styrol/Diolefin (insbesondere Butadien)-Kautschuken werden sowohl Lösungs-SBR-Kautschuke abgekürzt: L-SBR als auch Emulsion-SBR-Kautschuke, abgekürzt: E-SBR verstanden. Unter L-SBR versteht man kautschukartige Polymere, die in einem Lösungsprozess auf der Basis von Vinylaromaten und konjugierten Dienen hergestellt werden Geeignete vinylaromatische Monomere sind Styrol, o-, m- und p-Methylstyrol, technische Methylstyrolgemische, p-tert.-Butylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat beträgt bevorzugt 5 bis 50 Gew.%, bevorzugter 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen beträgt allgemein 50 bis 95 Gew.%, bevorzugt 60 bis 90 Gew.%. Der Gehalt an Vinylgruppen im einpolymerisierten Dien beträgt allgemein 10 bis 90%, der Gehalt an 1,4-trans-ständigen Doppelbindungen beträgt 20 bis 80% und der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 20%.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen. Unter L-SBR sollen sowohl lineare als auch verzweigte oder endgruppenmodifizierte Kautschuke verstanden werden.

Die in Lösung polymerisierten Vinylaromat/Diolefin-Kautschuke besitzen vorteilhaft Mooneywerte zwischen 20 und 150 Mooneyeinheiten, vorzugsweise 30 bis 100 Mooneyeinheiten.

Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20°C auf, bestimmt durch Differentialthermoanalyse (DSC).

Unter E-SBR versteht man kautschukartige Polymere, die in einem Emulsionsprozess auf der Basis von Vinylaromaten, konjugierten Dienen und gegebenenfalls weiteren Monomeren hergestellt werden. Vinylaromaten sind Styrol, p-Methylstyrol und alpha-Methylstyrol. Diene sind insbesondere Butadien und Isopren. Weitere Monomere sind insbesondere Acrylnitril. Die Gehalte an Vinylaromaten liegen zwischen 10 und 60 Gew.%. Die Glastemperatur liegt zwischen -50 und +20°C (bestimmt mittels DSC) und die Mooneywerte zwischen 20 und 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20°C auf, bestimmt durch Differentialthermoanalyse (DSC).

Polybutadien (BR) umfasst insbesondere zwei unterschiedliche Polybutadien-Typklassen. Die erste Klasse weist einen 1,4-cis-Gehalt von mindestens 90% auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt. Die Glastemperatur dieses Polybutadien liegt bevorzugt bei ≤ -90°C (bestimmt mittels DSC).

Die zweite Polybutadientypklasse wird mit Li-Katalysatoren hergestellt und weist Vinylgehalte von 10% bis 80% auf. Die Glastemperaturen dieser Polybutadienkautschuke liegen im Bereich von -90 bis +20°C (bestimmt mittels DSC).

Erfindungsgemäß bevorzugt sind Kautschuke ausgewählt aus der Gruppe, die besteht aus: Styrol/Butadien-Kautschuken und Polybutadien, wobei diese Kautschuke auch mit Mineralölen verstreckt sein können.

### Cellulose und Cellulosederivate

Die erfindungsgemäße Kautschukzubereitung enthält mindestens eine Cellulose und/oder ein Cellulosederivat. Als Cellulose wird bevorzugt handelsübliche, faserförmige oder pulver/ pastillenförmige Cellulose (CAS-Nr.: 9004-34-6) eingesetzt. Als Cellulosederivate kommen insbesondere folgende Umsetzungsprodukte von Cellulose mit

Phenyl -isocyanat, n-Buttersäureanhydride, Essigsäureanhydrid, Butylisocyanat, Stearylchlorid, Stearylisocyanat, Buttersäurechlorid in Frage. Bevorzugt sind Cellulosederivate, die durch Veresterung von Cellulose mit Carbonsäuren wie z.B. Essigsäure erhältlich sind. Besonders bevorzugtes Cellulosederivat ist Celluloseacetat (CAS-Nr.: 9004-35-7). Die Cellulose kann allein oder in beliebiger Mischung mit den genannten Cellulosederivaten eingesetzt werden. Bevorzugt ist es, alleine Celluloseacetat einzusetzen.

### Triacetin

Die erfindungsgemäße Kautschukzubereitung enthält mindestens ein Triacetin. Triacetin ist auch bekannt unter der Bezeichnung Glycerintriacetat oder 1,2,3-Propantrioltriacetat (CAS-Nr.: 102-76-1, Handelsprodukt der Fa. Lanxess Deutschland GmbH).

### Zusatzstoffe

Die erfindungsgemäße Kautschukzubereitung kann gegebenenfalls weitere Zusatzstoffe enthalten. Als solche kommen beispielsweise übliche Füllstoffe, Vernetzungssysteme, Vulkanisationsbeschleuniger auf Schwefelbasis , Weichmacher, Verarbeitungswirkstoffe, Alterungs-, UV-, Ozonschutzmittel sowie sonstige Additive wie Klebrigmacher-Harze, Pigmente, Farbstoffe, Treibmittel, Haftmittel und Haftvermittler, Reversionsschutzmittel in Frage.

Die Menge an eingesetzten Zusatzstoffen kann in der erfindungsgemäßen Kautschukzubereitung stark variieren. Im Allgemeinen enthält die erfindungsgemäße Kautschukzubereitung 0,1 bis 100 phr, vorzugsweise 0,1 bis 95 phr und besonders bevorzugt 0,1 bis 90 phr an einem oder mehreren Zusatzstoffen.

### Füllstoffe

Es gibt mehrere Möglichkeiten, Füllstoffe zu klassifizieren. Zweckmäßig ist die Einteilung entsprechend der Wechselwirkung mit dem Kautschuk in verstärkende (aktive) und inaktive Füllstoffe.

### Inaktive Füllstoffe:

Als weiterer, für die erfindungsgemäßen Kautschukzubereitungen geeigneter Füllstoff ist insbesondere Ruß zu nennen, Erfmdungsgemäß einzusetzende Ruße sind insbesondere ldquor;carbon" bzw. ldquor;carbon black" die bevorzugt nach dem gas black-, furnace black-, lamp black- und thermal black-Verfahren hergestellt werden und nach der neuen ASTM-Nomenklatur ( ASTM D 1765 und D 2516) als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N 642, N 650, N 660, N 683, N 754, N 762, N 765, N 772, N 774, N 787, N 907, N 908 N 990, N 991 S 3 etc. bezeichnet werden. Die erfindungsgemäß verwendeten Ruße besitzen bevorzugt BET-Oberflächen zwischen 5 bis 200 m²/g.

Ruß kann der erfindungsgemäßen Kautschukzubereitung in Mengen von 0 bis 120 phr, vorzugsweise 1 bis 100 phr, besonders bevorzugt 5 bis 80 phr zugesetzt werden.

Falls die erfindungsgemäße Kautschukzubereitung Ruß enthält, so liegt die Gesamtmenge von hydroxylgruppen-haltigem oxidischen Füllstoff und Ruß bevorzugt bei 20 bis 160 phr, vorzugsweise bei 25 bis 140 phr.

Weitere Füllstoffe, die gegebenenfalls eingesetzt werden können, sind:
- synthetische Silikate, wie Aluminiumsilikat, Erdalkalisilikat, wie Magnesiumsilikat oder Calciumsilikat mit BET-Oberflächen von 20-400 m2/g und Primärteilchendurchmessern von 5-400 nm
- natürliche Silikate, wie Kaolin und andere natürlich vorkommende Kieselsäuren,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Latten, Stränge oder Mikroglaskugeln)

### Aktive Füllstoffe:

Die erfindungsgemäße Kautschukzubereitung enthält bevorzugt mindestens einen weiteren Füllstoff aus der Reihe der hydroxylgruppen-haltigen oxidischen Füllstoffe. Als hydroxylgruppen-haltiger oxidischer Füllstoff wird vorzugsweise ein siliziumhaltiger oxidischer hydroxylgruppen-haltiger Füllstoff, wie insbesondere Kieselsäure eingesetzt. Derartige, insbesondere hydrophile Kieselsäuren tragen insbesondere an der Oberfläche Hydroxylgruppen.

Kieselsäure oder ldquor;Silica" wird insbesondere als pyrogene Kieselsäure oder als gefällte Kieselsäure eingesetzt, wobei erfindungsgemäß die gefällte Kieselsäure bevorzugt wird. Die gefällten Kieselsäuren haben eine spezifische Oberfläche von 5 bis 1000 m2/g bestimmt nach BET, vorzugsweise eine spezifische Oberfläche von 20 bis 400 m2/g. Sie werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al.-, Mg-, Ca-, Ba-, Zn-, Zr-, Ti-Oxiden vorliegen.

Erfindungsgemäß bevorzugt werden Kieselsäuren mit spezifischen Oberflächen von 5 bis 1000 m2/g, bevorzugter 20 bis 400 m2/g, jeweils bestimmt nach BET, eingesetzt.

Im allgemeinen enthält die erfindungsgemäße Kautschukzubereitung 5 bis 100 phr an mindestens einem hydroxylgruppen-haltigen oxidischen Füllstoff, vorzugsweise 30 bis 100 phr und insbesondere 50 bis 90 phr, wobei der hydroxylgruppen-haltige oxidische Füllstoff vorteilhaft mindestens 30%, vorzugsweise mindestens 50% des Füllstoffanteils bezogen auf die Gesamtmenge der eingesetzten Füllstoffe ausmacht.

Die Oberfläche der Kieselsäure kann auch durch Silane modifiziert werden. Eine solche chemische Reaktion kann mit allen Füllstoffen durchgeführt geführt, die Silanolgruppen an der Oberfläche besitzen. Silanolgruppen reagieren relativ leicht mit Silanen, unter Bildung organischer Siloxane. Die Modifizierung der OH-Gruppen mit Silanen (mono- und bifunktionelle organische Silane) verbessert die Wechselwirkung mit unpolaren Kautschuken.

### Silane zur Oberflächenmodifizierung von Kieselsäuren

Die erfindungsgemäße Kautschukzubereitung kann einen oder mehrere mono- und bifunktionelle organische Silane enthalten. Als Silane kommen vorzugsweise schwefelhaltigen siliciumorganischen Verbindungen in Frage. Besonders bevorzugt sind schwefelhaltige siliciumorganische Verbindungen, die vorzugsweise ein oder mehrere Alkoxysilyl-, bevorzugt eine oder mehrere Trialkoxysilylgruppen enthalten.

Ganz besonders bevorzugte schwefelhaltige siliciumorganische Verbindungen sind Bis(tri-ethoxy-silyl-propylpolysulfan); solche Produkte sind beispielsweise kommerziell unter dem Namen Silan Si 75 und als Silan Si 69 (CAS-Nr.: 40372-72-3) der Fa. Degussa verfügbar.

Die schwefelhaltigen siliciumorganischen Verbindungen können der erfindungsgemäßen Kautschukzubereitung in einer Menge von 0,1 phr bis 14 phr, vorzugsweise von 0,2 bis 12 zugesetzt werden.

Für den Fall, dass die erfindungsgemäße Kautschukzubereitung einen hydroxylgruppen-haltigen oxidischen Füllstoff enthält, ist es vorteilhaft, mindestens ein Silan zuzusetzen, welches die Anbindung des hydroxylgruppen-haltigen oxidischen Füllstoffs an die Kautschukmatrix gewährleistet. Diese Silane werden auch als Verstärkungsadditive bezeichnet. Geeignete Silane sind insbesondere solche aus der Reihe der schwefelhaltigen siliciumorganischen Verbindungen. Beispielsweise seien genannt bifunktionelle Organosilane mit vernetzungsaktiven Gruppen (Vinyl- oder Thiogruppen). Bevorzugt enthält die erfindungsgemäße Kautschukzusammensetzung als Verstärkungsadditiv für hydroxylgruppenhaltige oxidische Füllstoffe mindestens ein Bis(triethoxisilylpropyl)-tetrasulfid oder Bis(triethoxysilylpropyl)disulfid,

### Vernetzungssystem

Die erfindungsgemäße Kautschukzubereitung kann ein oder mehrere Vernetzungssysteme enthalten. Als solche sind insbesondere Schwefel oder Schwefelspender wie zum Beispiel Dithiomorpholin (DTDM) oder 2-(4-Morpholinodithio)benzothiazol (MBSS) geeignet. Schwefel und Schwefelspender können in Mengen von beispielsweise 0,1 bis 15 phr bevorzugt 0,1 bis 10 phr eingesetzt werden. Die Vernetzungssysteme können allein oder in Kombination mit Vulkanisationsbeschleunigern eingesetzt werden.

### Vulkanisationsbeschleuniger

Beispiele für geeignete Vulkanisationsbeschleuniger sind z. B. Mercaptobenzthiazole, Sulfenamide, Guanidine, Thiuramdisulfide, Dithiocarbamate, Thioharnstoffe, Thiocarbonate sowie Dithiophosphate etc.

Die Vulkanisationsbeschleuniger können in Mengen von 0,1 bis 15 phr, bevorzugt 0,1 bis 10 phr eingesetzt werden.

Die erfindungsgemäß hergestellten Kautschukzubereitungen enthalten bevorzugt mindestens einen Vulkanisationsbeschleuniger. Es können auch mehrere Beschleuniger gegebenenfalls in Kombination mit üblichen Aktivatoren eingesetzt werden.

### Reversionsschutzmittel

Die erfindungsgemäßen Kautschukzubereitungen können eine oder mehrere Reversionsschutzmittel wie beispielsweise 1,6-Bis-(N,N-dibenzyl-thiocarbamoyldithio)hexan (CAS-Nr.: 151900-44-6), 1,3-Bis((3-methyl-2,5-dioxopyrrol-1-yl)methyl)benzol (CAS-Nr.. 119462-56-5) oder Hexamethylen-1,6-bis(thiosulfat), Dinatriumsalz, Dihydrat (CAS-Nr.: 5719-73-3) enthalten. Besonders bevorzugt ist 1,6-Bis-(N,N-dibenzyl-thiocarbamoyldithio)hexan zu nennen. Die genannten Reversionsschutzmittel können einzeln oder in beliebiger Mischung untereinander eingesetzt werden; vorzugsweise 0,1 bis 20 phr bezogen auf den Kautschuk.

### Alterungsschutzmittel

Gegen die Einwirkung von Wärme und Sauerstoff kann es vorteilhaft sein, der erfindungsgemäßen Kautschukzubereitung ein oder mehrere Alterungsschutzmittel zuzusetzen. Geeignet sind z.B. phenolische Alterungsschutzmittel wie alkylierte Phenole, styrolisiertes Phenol, sterisch gehinderte Phenole wie 2,6-Di-tert-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt werden. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD) sind.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden. Die genannten Alterungsschutzmittel können der erfindungsgemäßen Kautschukmischung in üblichen Mengen, beispielsweise von 0,1 bis 5 phr zugesetzt werden.

### Antioxidantien

Die Ozonbeständigkeit der erfindungsgemäßen Kautschukzubereitung kann durch den Fachmann bekannte Antioxidantien verbessert werden wie beispielsweise N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD), Enol Ether oder cyclische Acetale. Die Antioxidantien können der erfindungsgemäßen Kautschukmischung in üblichen Mengen von beispielsweise 0,1 bis 5 phr zugesetzt werden.

### Weichmacher

Die erfindungsgemäße Kautschukzubereitung kann übliche Weichmacher wie Mineralöl und/oder synthetische Ester wie beispielsweise Phthalsäureester, Adipinsäureester, Phosphorsäurester, Zitronensäureester, Benzoesäureester, Trimilitatsäureester oder Essigsäureester enthalten. Die übliche Einsatzmenge liegt hier bei 0,11 bis 80 phr, bevorzugt 0,2 bis 60 phr, besonders bevorzugt 0,5 bis 45 phr.

### Verarbeitungshilfsmittel

Die erfindungsgemäße Kautschukzubereitung kann weiterhin übliche Verarbeitungshilfsmittel enthalten. Solche Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel kann die erfindungsgemäße Kautschukmischung alle für die Verarbeitung von Kunststoffen üblichen Gleitmittel in den für diese Zusätze üblichen Mengen enthalten.

### Sonstige Additive

Optional können weitere Additive der erfindungsgemäßen Kautschukzubereitung zugesetzt werden wie Flammschutzmittel, Treibmittel, Antistatika, Biozide, Mineralöl, Tackifier, Treibmittel, Farbstoffe, Pigmente, Wachse, Harze, Streckmittel, organische Säuren, Vulkanisationsverzögerer, Vulkanisationsaktivatoren, wie Zinkoxid, Stearinsäure, sowie Zinkstearat, Metalloxide, sowie weitere Füllstoffaktivatoren, wie beispielsweise Triethanolamin, Trimethylolpropan, Polyethylenglykol, Hexantriol, aliphatische Trialkoxysilane oder anderen, die in der Gummiindustrie bekannt sind. Die üblichen Einsatzmengen liegen hier bei 1 bis 50 phr.

### Kunststoffe

Die erfindungsgemäße Kautschukzubereitung kann auch weitere Kunststoffe enthalten, die beispielsweise als polymere Verarbeitungshilfsmittel oder Schlagzähigkeitsverbesserer wirken. Diese Kunststoffe werden ausgewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkolaolen. Zu nennen sind insbesondere Polyacrylate mit gleichen oder verschiedenen Alkoholresten aus der Gruppe der C4- bis C8-Alkohole, besonders des Butanols, Hexanols, Octanols und 2-Ethylhexanols, Polymetliylmethacrylat, Methyl-methacrylat-Butylacrylat-Copolymere, Methylmethacrylat-Butylmethacrylat-Copolymere, Ethylen-VinylacetatCopolymere, chloriertes Polyethylen, Ethylen-Propylen-Copolymere, Ethylen-Propylen-Dien-Copolymere.

Es können mehrere Zusatzstoffe in beliebiger Kombination enthalten sein.

Bevorzugt sind Kautschukzubereitungen enthaltend mindestens einen Kautschuk,
0,2 bis 50 phr Cellulose und/oder Celluloseacetat, 0,2 bis 60 phr Triacetin und 0 bis 10 phr an mindestens einem Schwefel/Beschleuniger -System und 0 bis 95 phr an mindestens einem weiteren Zusatzstoff.

Besonders bevorzugt sind Kautschukzubereitungen enthaltend mindestens einen Kautschuk aus der Reihe der Synthesekautschuke, 0,3 bis 30 phr an Cellulose und/oder 0,3 bis 30 phr an Celluloseacetat, und 0,5 bis 45 phr Triacetin, 0 bis 10 phr an mindestens einem Schwefel/Beschleuniger -System aus der Reihe der Schwefel/Sulfenamid - Systeme und 50 bis 90 phr an mindestens einem hydroxylgruppen-haltigen oxidischen Füllstoff und 0,2 bis 12 phr an mindestens einem Silan aus der Reihe der schwefelhaltigen siliciumorganischen Verbindungen.

Insbesondere bevorzugt sind Kautschukzubereitungen enthaltend mindestens einen Kautschuk aus der Reihe Styrol-Butadien-Kautschuk und Polybutadien, 0,3 bis 30 phr an Cellulose und/oder 0,3 bis 30 phr an Celluloseacetat und 0,5 bis 45 phr Triacetin, 0 bis 10 phr an mindestens einem Schwefel/Beschleuniger-System aus der Reihe der Schwefel/Sulfenamid-Systeme, 50 bis 90 phr Kieselsäure mit einer spezifischen BET Oberfläche von 5 bis 1000 m²/g und 0,2 bis 12 phr an mindestens einem Verstärkungsadditiv aus der Reihe Bis(triethoxisilylpropyl)-tetrasulfid und Bis(triethoxysilylpropyl)disulfid.

Die erfindungsgemäße Kautschukzubereitung kann in an sich bekannter Weise hergestellt werden, indem man beispielsweise die einzelnen Bestandteile und gegebenenfalls weitere Zusatzstoffe miteinander vermischt. Das Mischen wird üblicherweise in einem diskontinuierlichen Mischverfahren (auf Innenmischern und Walzwerken) bei einer Temperatur von beispielsweise 80 bis 150°C vorgenommen.

Dabei können Cellulose und/oder Cellulosederivat und Triacetin der Kautschukkomponente entweder einzeln oder als Mischung in beliebigem Mischungsverhältnis und in jeder Mischstufe des Mischverfahrens beigegeben werden.

Aus den erfindungsgemäßen Kautschukzubereitungen können anschließend, in an sich bekannter Weise, nach Zugabe üblicher Vulkanisationshilfsmittel, in einer Mischapparatur bei Temperaturen von beispielsweise 150-200°C, bevorzugt bei 130-180°C und gegebenenfalls unter Druck von 1 bis 100 bar, Kautschukvulkanisate hergestellt werden.

Weiterer Gegenstand der Erfindung ist die Verwendung einer Mischung enthaltend mindestens eine Cellulose und/oder Cellulosederivat und Triacetin als Additiv für Kautschuk.

Die erfindungsgemäß zu verwendenden Mischungen enthalten mindestens eine Cellulose und/oder Cellulosederivat. Als Cellulose wird faserförmige Cellulose (Beschreibung der reinen Cellulose (CAS-Nr.: 9004-34-6) eingesetzt. Als Cellulosederivate kommen insbesondere folgende Umsetzungsprodukte von Cellulose mit Phenylisocyanat, n-Buttersäureanhydrid, Essigsäureanhydrid, Butylisocyanat, Stearylchlorid, Stearylisocyanat oder Buttersäurechlorid in Frage.

Bevorzugt sind Cellulosederivate, die durch Veresterung von Cellulose mit Carbonsäuren wie z.B. Essigsäure erhältlich sind. Besonders bevorzugtes Cellulosederivat ist Celluloseacetat (CAS-Nr.: 9004-35-7). Die Cellulose kann allein oder in beliebiger Mischung mit den genannten Cellulosederivaten eingesetzt werden.

Bevorzugt enthält die erfindungsgemäß zu verwendende Mischung Celluloseacetat und Triacetin.

Die erfindungsgemäß zu verwendende Mischung enthält im Allgemeinen 99 Gewichtsteile bis 1 Gewichtsteilen an mindestens einer Cellulose und/oder Cellulosederivat und 1 bis 99 Gewichtsteile Triacetin. Bevorzugt enthält die erfindungsgemäß zu verwendende Mischung 60 bis 2 Gewichtsteile an mindestens einer Cellulose und/oder Cellulosederivat und 40 bis 98 Gewichtsteile Triacetin, ganz besonders bevorzugt 50 bis 3 Gewichtsteile Cellulose und/oder Cellulosederivat und 50 bis 97 Gewichtsteile Triacetin, ganz besonders bevorzugt 40 bis 4 Gewichtsteile Cellulose und/oder Cellulosederivat und 60 bis 96 Gewichtsteile Triacetin.

Die erfindungsgemäß zu verwendende Mischung eignet sich als Additiv für Kautschuk. Dabei kommen die oben als allgemein und bevorzugt genannten Kautschuke und deren Mischungen in Frage. Durch den Einsatz der erfindungsgemäß zu verwendenden Mischung als Kautschukadditiv gelingt es die Verarbeitbarkeit der Kautschukzubereitung zu verbessern. So werden insbesondere die Anvulkanisationszeiten der Kautschukzubereitung verlängert bei gleichzeitiger Verkürzung der Vulkanisationszeiten, ohne dass die Eigenschaften daraus hergestellter Kautschukvulkanisate wie Härte, Bruchdehnung, Zugfestigkeit, Abrieb negativ beeinflusst werden.

Gegenstand der vorliegenden Erfindung ist somit auch ein Verfahren zur Herstellung von Kautschukvulkanisaten, das dadurch gekennzeichnet ist, dass man mindestens eine Cellulose und/oder Cellulosederivat und Triacetin und mindestens einen Kautschuk jeweils in den für diese Komponenten allgemein oder bevorzugt angegebenen Mengen, gegebenenfalls in Gegenwart von einem oder mehreren Zusatzstoffen wie beispielsweise weiteren Füllstoffen, Reversionsschutzmitteln, Alterungsschutzmitteln, Antioxidantien, Weichmachern und Verarbeitungshilfsmitteln bei Temperaturen von 80 bis 150°C in einer Mischapparatur, beispielsweise einem Mischer, einer Walze und/oder Extruder, in einem mehrstufigen Mischprozess vermischt, und in Gegenwart mindestens eines Vernetzungssystems und/oder Vulkanisationsbeschleunigers bei einer Temperatur von 150°C bis 250°C, bevorzugt 130 bis 180°C, gegebenenfalls unter Druck von 1 bis 100 bar ausvulkanisiert.

Ein weiterer Gegenstand der vorliegenden Erfindung ist weiterhin ein Verfahren zur Herstellung von gefüllten Kautschukvulkanisaten, das dadurch gekennzeichnet ist, dass man mindestens einen Kautschuk, mindestens eine Cellulose und/oder Cellulosederivat und Triacetin, mindestens einen hydroxylgruppen-haltigen oxidischen Füllstoff und mindestens ein mono- oder bifunktionelles organisches Silan, jeweils in den für diese Komponenten allgemein oder bevorzugt angegebenen Mengen, gegebenenfalls in Gegenwart von einem oder mehreren Zusatzstoffen wie beispielsweise weiteren Füllstoffen, Reversionsschutzmitteln, Alterungsschutzmitteln, Antioxidantien, Weichmachern und Verarbeitungshilfsmitteln bei Temperaturen von 80 bis 150°C in einer Mischapparatur, beispielsweise einem Mischer, einer Walze und/oder Extruder, in einem mehrstufigen Mischprozess vermischt, und in Gegenwart mindestens eines Vernetzungssystems und/oder Vulkanisationsbeschleunigers bei einer Temperatur von 150°C bis 250°C, bevorzugt 130 bis 180°C, gegebenenfalls unter Druck von 1 bis 100 bar ausvulkanisiert.

Eine Schwefelvernetzung mit den oben genannten Vernetzungssystemen ist bei der Herstellung der erfindungsgemäßen Kautschukvulkanisate bevorzugt.

Die Zugabe des erfindungsgemäß zu verwendenden Kautschukadditivs sowie die Zugabe von gegebenenfalls weiteren Zusatzstoffen erfolgt bevorzugt im ersten Teil des Mischprozesses bei Massetemperaturen von 100 - 200 °C, sie kann jedoch auch später bei tieferen Temperaturen (20 - 100°C) z.B. zusammen mit Schwefelvemetzer und/oder Beschleuniger erfolgen. Dabei kann das erfindungsgemäße Additiv direkt als Mischung der Komponenten Cellulose und/oder Cellolosederivat und Triacetin oder in Form der einzelnen Komponenten zugegeben werden.

Dabei werden der Vernetzer und/oder der Vulkanisationsbeschleuniger zweckmäßigerweise nicht in einem Mischschritt mit erhöhten Temperaturen zugesetzt, wie er zur Aktivierung des hydroxylgruppenhaltigen oxidischen Füllstoffs (z.B. Kieselsäure) mittels der schwefelhaltigen siliciumorganischen Verbindungen durchgeführt wird, da dies zu einer vorzeitigen Anvulkanisation der Mischung führen würde. Vernetzer und/oder Vulkanisationsbeschleuniger werden daher bevorzugt nach Zugabe der schwefelhaltigen siliciumorganischen Verbindungen bei Temperaturen von bevorzugt unter 100°C eingearbeitet.

Die Herstellung der erfindungsgemäßen Kautschukvulkanisate kann beispielsweise in folgenden Mischstufen erfolgen:

### 1. Mischstufe:

■ Kautschuk (z.B. Mischung aus SBR und BR) werden in einem Innenmischer vorgelegt und ca. 30 Sekunden gemischt
■ Gegebenenfalls Zugabe von hydroxylgruppen-haltigem oxidischem Füllstoff und Silan zur Oberflächenmodifizierung (z.B. Zugabe von zwei Drittel Kieselsäure, zwei Drittel Silan, mischen für ca. 60 Sekunden und weitere Zugabe von ein Drittel Kieselsäure, ein Drittel Silan, mischen für ca. 60 Sekunden)
■ Zugabe Celluloseacetat/Triacetin-Gemisch und gegebenenfalls Zugabe von Russ, Öl, Alterungsschutzmitteln, Zinkoxid sowie Ozonschutzwachse, mischen für ca. 60 Sekunden.

Dieser Mischungsvorgang kann bei Temperaturen von 20 bis 200°C erfolgen, vorzugsweise im Bereich von 150°C.

### 2. Mischstufe:

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

Verarbeitungstemperaturen liegen hierbei unter 60°C.

### 3. Mischstufe:

In der dritten Mischstufe erfolgt ein Nachzwicken bei 140 bis 170°C, vorzugsweise bei 150°C zum Beispiel in einem Kneter /Innenmischer.

### 4. Mischstufe:

Zugabe von Zusatzstoffen wie zum Beispiel Vulkanisationsbeschleuniger und/oder SchwefelVemetzer, vorzugsweise auf einer Walze bei niedrigen Temperaturen (< 80°C).

Geeignete Aggregate für die Mischungsherstellung sind an sich bekannt und schließen beispielsweise Walzen, Innenmischer oder auch Mischextruder ein.

Ein weiterer Gegenstand der vorliegenden Erfindung ist die Verwendung einer erfindungsgemäßen Kautschukzubereitung zur Herstellung von Kautschukvulkanisaten, insbesondere von gefüllten Kautschukvulkanisaten, und Kautschukformkörpern, insbesondere von Reifen und Reifenbauteilen.

Ein weiterer Gegenstand der vorliegenden Erfindung sind Kautschukvulkanisate und Kautschukformkörper, die sich aus den erfindungsgemäßen Kautschukzubereitungen in bekannter Weise durch ein Vulkanisationsverfahren herstellen lassen.

Die hergestellten Kautschukvulkanisate eignen sich zur Herstellung verschiedener Reifenbauteile insbesondere für Reifenlaufflächen, Subtreads, Karkassen, Seitenwänden, verstärkten Seitenwänden für Notlaufreifen, Apexmischungen etc. sowie für die Herstellung von technischen Gummiartikeln wie Dämpfungselementen, Walzenbelägen, Belägen von Förderbändern, Riemen, Spinnkopsen, Dichtungen, Golfballkernen, Schuhsohlen, etc. Besonders geeignet sind die Mischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen ein.

### Beispiele

Im Folgenden soll die vorliegende Erfindung durch Beispiele erläutert werden, ohne diese jedoch darauf zu beschränken.

Bestandteile der erfindungsgemäßen Kautschukzubereitungen:
1) Buna® VSL 5025-1 der Lanxess Deutschland GmbH
2) Buna® CB 24 der Lanxess Deutschland GmbH
3) Vulkasil S der Lanxess Deutschland GmbH
4) Tudalen 1849-1
5) Zinkweiss Rotsiegel der Firma Grillo Zinkoxid GmbH
6) Edenor C 18 98-100 der Firma Cognis Deutschland GmbH
7) 2,2,4-Trimethyl-1,2-dihydrochinolin, polymerisiert (Vulkanox® HS/LG der Lanxess Deutschland GmbH)
8) N-1,3-Dimethylbutyl-N'-phenyl-p-phenylendiamin (Vulkanox® 4020/LG der Lanxess Deutschland GmbH)
9) Antilux® 654 der RheinChemie GmbH
10) Bis(triethoxysilylpropyl)polysulfid (Si 69 der Degussa Hüls AG)
11) Corax N 339 der Degussa Hüls AG
12) Löslicher Schwefel (Mahlschwefel 90/95° Chancel® der Firma Solvay Barium Strontium)
13) N-Cyclohexyl-2-benzthiazylsulfenamid (Vulkacit® CZ der Lanxess Deutschland GmbH)
14) Diphenylguanidin (Vulkacit® D/C der Lanxess Deutschland GmbH)
15) Celluloseacetate (CAS-Nr.: 9004-35-7) 4 Gewichtsprozent der Firma Eastman und 96 Gewichtsprozent Triacetin (CAS-Nr.: 102-76-1) der Lanxess Deutschland GmbH

### Herstellung der erfindungsgemäßen Kautschukvulkanisate

Aus den in Tabelle 1 aufgeführten Kautschuk-Rezepturen für die Beispiele 1 und 2 sowie für das Referenzbeispiel wurden Vulkanisate hergestellt. Dazu wurden jeweils in einem mehrstufigen Mischprozess, wie unten beschrieben, die jeweiligen Bestandteile der Beispiele 1 und 2 sowie des Referenzbeispiels gemischt und die Mischungen anschließend bei 170°C ausvulkanisiert.

### 1. Mischstufe:

■ BUNA^{®} CB 24 und BUNA^{®} VSL 5025-1 wurde in einem Innenmischer vorgelegt und ca. 30 Sekunden gemischt
■ Zugabe zwei Drittel VULKASIL^{®} S, zwei Drittel SI^{®} 69 mischen für ca 60 Sekunden
■ Zugabe ein Drittel VULKASIL^{®} S, ein Drittel SI^{®} 69, sowie TUDALEN^{®} 1849-1, mischen ca. 60 Sekunden

Zugabe von CORAX^{®} N 339, EDENOR^{®} C 18 98-100, Celluloseacetat/Triacetin-Gemisch, VULKANOX^{®} 4020/LG, VULKANOX^{®} HS/LG, ZINKWEISS ROTSIEGEL sowie ANTILUX^{®} 654, mischen für ca. 60 Sekunden

Dieser Mischungsvorgang erfolgte bei einer Temperatur von 150°C.

### 2. Mischstufe:

Nach Abschluss der ersten Mischstufe wurde das Mischstück von einem nachgeschalteten Walzwerk aufgenommen und zu einer Platte ausgeformt und für 24 Stunden bei Raumtemperatur gelagert.

Verarbeitungstemperaturen liegen hierbei unter 60°C.

### 3. Mischstufe:

In der dritten Mischstufe erfolgte ein Nachzwicken bei 150°C in einem Kneter.

### 4. Mischstufe:

Zugabe der Zusatzstoffe MAHLSCHWEFEL 90/95 CHANCEL, VULKACIT^{®} CZ/C, VULKACIT^{®} D/C auf einer Walze bei Temperaturen unter 80°C.

Die hergestellten Kautschukzubereitungen und Vulkanisate wurden den unten angegebenen technischen Prüfungen unterzogen. Die ermittelten Werte sind ebenfalls Tabelle 1 zu entnehmen.

### Prüfungen der Kautschukzubereitungen und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird.

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten der in Tabelle 1 genannten Kautschukzubereitungen werden mittels Scherscheibenviskosimeter nach Mooney gemessen.

Des Weiteren kann mit der gleichen Prüfung auch das "Scorch"-Verhalten einer Mischung gemessen werden. Die gewählte Temperatur ist in diesem Patent 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmun2 der Härte (Shore A):

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zusversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 1 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan delta indirekt über das Verhältnis zwischen Verlustmodul G" und Speichermodul G' bestimmt.

**Tabelle 1**

| | | | **Referenz** | **Beispiel 1** | **Beispiel 2** |
|---|---|---|---|---|---|
| | | | phr | phr | phr |
| BUNA CB 24 | | | 30 | 30 | 30 |
| BUNA VSL 5025-1 | | | 96 | 96 | 96 |
| CORAX N 339 | | | 6,4 | 6,4 | 6,4 |
| VULKASIL S | | | 80 | 80 | 80 |
| TUDALEN 1849-1 | | | 8 | 8 | 0 |
| EDENOR C 18 98-100 | | | 1 | 1 | 1 |
| VULKANOX | | | | | |
| 4020/LG | | | 1 | 1 | 1 |
| VULKANOX HS/LG | | | 1 | 1 | 1 |
| ZINKWEISS | | | | | |
| ROTSIEGEL | | | 2,5 | 2,5 | 2,5 |
| ANTILUX 654 | | | 1,5 | 1,5 | 1,5 |
| SI 69 | | | 6,4 | 6,4 | 6,4 |
| MAHLSCHWEFEL | | | | | |
| 90/95 CHANCEL | | | 1,5 | 1,5 | 1,5 |
| VULKACIT CZ/C | | | 1,5 | 1,5 | 1,5 |
| VULKACIT D/C | | | 2 | 2 | 2 |
| Celluloseacetat/ | | | | | |
| Triacetin | | | | 10 | 20 |
| Mooney Viskosität | | | | | |
| (ML 1+4) | DIN 53523 | [ME] | 91 | 66 | 66 |
| Anvulkanisationszeit | Acc. to ASTM D | | | | |
| (MS-t5) | 5289-95 | sec | 1085 | 1582 | 1468 |
| Ausvulkanisationszeit | | | | | |
| (t95%) | DIN 53529 | sec | 1213 | 1091 | 940 |
| Härte | DIN 53505 | [Shore A] | 70 | 70 | 69 |
| Modul 300 | DIN 53504 | MPa | 16 | 14 | 12 |
| Bruchdehnung | DIN 53504 | % | 338 | 377 | 388 |
| Zugfestigkeit | DIN 53504 | MPa | 18 | 19 | 16 |
| Abrieb DIN 53516 | DIN 53516 | mm³ | 85 | 89 | 94 |
| | | Indiz für Nassrutschfestig-keit | | | |
| tan δ (0°C) | - | | 0,458 | 0,416 | 0,399 |
| | | Indiz für Rollwiderstand | | | |
| tan δ (60°C) | - | | 0,147 | 0,142 | 0,123 |

Wie die Ergebnisse von Beispiel 1 zeigen, wird der tan δ -Wert bei 60°C (Indiz für den Rollwiderstand) bei Zugabe von 10 phr des erfindungsgemäßen Additivs Celluloseacetat/Triacetin bezogen auf den Kautschuk erniedrigt. Gleichzeitig wird die Fließfähigkeit (Mooney Viskosität) gesenkt. Zusätzlich wird die Anvulkanisationszeit sowie die Bruchdehnung erhöht und die Ausvulkanisationszeit erniedrigt bei gleichbleibend guter Naßrutschfestigkeit (> 0,380). Wird, wie in Beispiel 2, auf die Weichmacheröl-Menge (TUDALEN 1849-1) verzichtet, jedoch die eingesetzte Menge Celluloseacetat/Triacetin weiter erhöht, auf 20 phr bezogen auf den Kautschuk, so stellt man erstaunlicherweise fest, dass der Rollwiderstand und damit der tan δ -Wert erheblich reduziert werden konnte, ohne die anderen mechanischen Eigenschaften wie Bruchdehnung, Zugfestigkeit und Härte zu verschlechtern. Auch in Beispiel 2 konnte die Anvulkanisationszeit und damit die Produktsicherheit erhöht sowie die Ausvulkanisationszeit verkürzt werden.

## Patentansprüche

1. Kautschukzubereitungen enthaltend mindestens einen Kautschuk, Triacetin und mindestens einen Füllstoff aus der Reihe Cellulose und/oder Cellulosederivat.

2. Kautschukzubereitung gemäß Anspruch 1, **dadurch gekennzeichnet, dass** sie 0,1 bis 100 phr an mindestens einer Cellulose und/oder Cellulosederivat und 0,1 bis 80 phr Triacetin enthält.

3. Kautschukzubereitung gemäß Anspruch 1 und 2, **dadurch gekennzeichnet, dass** sie mindestens einen Kautschuk ausgewählt aus der Reihe der Styrol/Butadien-Kautschuke und Polybutadien-Kautschuke enthält.

4. Kautschukzubereitung gemäß wenigstens einem der Ansprüche 1 bis 3, **dadurch gekennzeichnet, dass** sie als Cellulosederivat Celluloseacetat enthält.

5. Kautschukzubereitung gemäß wenigstens einem der Ansprüche 1 bis 4, **dadurch gekennzeichnet, dass** sie mindestens einen weiteren Füllstoff aus der Reihe der hydroxylgruppen-haltigen oxidischen Füllstoffe enthält.

6. Kautschukzubereitung gemäß wenigstens einem der Ansprüche 1 bis 5, **dadurch gekennzeichnet, dass** sie als weiteren Füllstoff Kieselsäure mit einer spezifischen BET Oberfläche von 5 bis 1000 m²/g enthält.

7. Kautschukzubereitung gemäß wenigstens einem der Ansprüche 1 bis 6, **dadurch gekennzeichnet, dass** sie mindestens einen Kautschuk aus der Reihe der Synthesekautschuke, 0,3 bis 30 phr an Cellulose und/oder 0,3 bis 30 phr an Celluloseacetat, 0,5 bis 45 phr Triacetin, 0 bis 10 phr an mindestens einem Schwefel/Beschleuniger -System aus der Reihe der Schwefel/Sulfenamid - Systeme, 50 bis 90 phr an mindestens einem hydroxylgruppen-haltigen oxidischen Füllstoff und 0,2 bis 12 phr an mindestens einem Silan aus der Reihe der schwefelhaltigen siliciumorganischen Verbindungen enthält.

8. Kautschukzubereitung gemäß wenigstens einem der Ansprüche 1 bis 7, **dadurch gekennzeichnet, dass** sie mindestens einen Kautschuk aus der Reihe der Styrol-Butadien-Kautschuke und Polybutadien-Kautschuke, 0,3 bis 30 phr an Cellulose und/oder 0,3 bis 30 phr an Celluloseacetat und 0,5 bis 45 phr Triacetin, 0 bis 10 phr an mindestens einem Schwefel/Beschleuniger-System aus der Reihe der Schwefel/Sulfenamid-Systeme, 50 bis 90 phr Kieselsäure mit einer spezifischen BET Oberfläche von 5 bis 1000 m2/g und 0,2 bis 12 phr an mindestens einem Silan aus der Reihe Bis(triethoxisilylpropyl)-tetrasulfid und Bis(triethoxysilylpropyl)disulfid enthält.

9. Verfahren zur Herstellung einer Kautschukzubereitung gemäß wenigstens einem der Ansprüchen 1 bis 8, **dadurch gekennzeichnet, dass** mindestens ein Kautschuk, Triacetin und mindestens ein Füllstoff aus der Reihe Cellulose und/oder Cellulosederivat und gegebenenfalls weitere Zusatzstoffe in einer Mischapparatur bei einer Temperatur von 20 bis 200°C, vorzugsweise von 50 bis 180°C, miteinander vermischt werden,.

10. Verwendung einer Mischung enthaltend mindestens eine Cellulose und/oder Cellulosederivat und Triacetin als Additiv für Kautschuk.

11. Verwendung gemäß Anspruch 10, **dadurch gekennzeichnet, dass** die Mischung 99 bis 1 Gewichtsteile an mindestens einer Cellulose und/oder Cellulosederivat und 1 bis 99 Gewichtsteile an Triacetin enthält.

12. Verfahren zur Herstellung von Kautschukvulkanisaten, **dadurch gekennzeichnet, dass** man eine Kautschukzubereitung gemäß mindestens einem der Ansprüche 1 bis 8 vulkanisiert.

13. Verfahren gemäß Anspruch 12, **dadurch gekennzeichnet, dass** man mindestens eine Cellulose und/oder Cellulosederivat und Triacetin und mindestens einen Kautschuk, gegebenenfalls in Gegenwart von einem oder mehreren Zusatzstoffen, bei Temperaturen von 20 bis 200°C in einer Mischapparatur, vermischt, und die Mischung in Gegenwart mindestens eines Vernetzungssystems und/oder Vulkanisationsbeschleunigers bei einer Temperatur von 150°C bis 250°C, gegebenenfalls unter Druck von 1 bis 100 bar, ausvulkanisiert.

14. Verfahren gemäß Anspruch 13, **dadurch gekennzeichnet, dass** mindestens eine hydroxylgruppen-haltiger oxidischer Füllstoff und mindestens ein mono- oder bifunktionelles organisches Silan zugesetzt wird.

15. Verwendung einer Kautschukzubereitung gemäß wenigstens einem der Ansprüche 1 bis 8 zur Herstellung von Kautschukvulkanisaten

16. Kautschukvulkanisate und Kautschukformkörper die erhältlich sind durch das Verfahren gemäß Anspruch 12.
